# EUROPEAN PATENT APPLICATION

(11) **EP 1 908 920 A2**
(43) Date of publication of application: **09.04.2008**
(21) Application number: 07116394.3
(22) Date of filing: 14.09.2007
(51) Int. Cl.: F01D 5/18, F01D 5/28, F01D 9/02, F02K 3/06

(54) **Guide vane and gas turbine comprising a plurality of these guide vanes**

(30) Priority: 27.09.2006 US 535676
(71) Applicant: General Electric Company, Schenectady, NY 12345 (US)
(72) Inventor: Moniz, Thomas Ory, Loveland, OH 45140 (US); Orlando, Robert Joseph, West Chester, OH 45069 (US); Macsotai, Noel Istvan, Loveland, OH 45140 (US)
(74) Representative: Illingworth-Law, William Illingworth

(57) **Abstract**

An outlet guide vane (100), for a gas turbine engine (10), comprises an airfoil (102) comprising a leading edge portion (130) and a trailing edge portion (132) each fabricated from a first material. A filler portion (202) is positioned between the leading and trailing edge portions and is fabricated from a second material that is different than said first material.

## Description

### BACKGROUND OF THE INVENTION

This invention relates generally to gas turbine engines, and more particularly, to a gas turbine engine vane and a method of fabricating the same.

At least one known gas turbine engine assembly includes a fan assembly that is mounted upstream from a core gas turbine engine. During operation, a portion of the airflow discharged from the fan assembly is channeled downstream to the core gas turbine engine wherein the airflow is further compressed. The compressed airflow is then channeled into a combustor, mixed with fuel, and ignited to generate hot combustion gases. The combustion gases are then channeled to a turbine which extracts energy from the combustion gases for powering the compressor, as well as producing useful work to propel an aircraft in flight. The other portion of the airflow discharged from the fan assembly exits the engine through a fan stream nozzle.

To facilitate channeling the airflow from the fan assembly to the core gas turbine engine, at least one known gas turbine engine assembly includes an outlet guide vane assembly that is used to remove swirl before the fan nozzle. configured to turn the airflow discharged from the fan assembly to a substantially axial direction prior to the fan flow being channeled through the bypass duct. In addition to turning the fan airflow, the outlet guide vane assembly also provides structural stiffness to the fan frame. More specifically, outlet guide vane assemblies generally include a plurality of outlet guide vanes that are coupled to the fan frame. To provide the necessary structural stiffness the fan frame, the known outlet guide vanes are forged as substantially solid vanes using a metallic material.

However, because the known outlet guide vanes are substantially solid, they increase the overall weight of the gas turbine engine assembly, and may also cause a reduction in fuel efficiency.

### BRIEF SUMMARY OF THE INVENTION

In one aspect, a method for fabricating a gas turbine engine outlet guide vane is provided. The method includes fabricating an airfoil that includes a leading edge portion and a trailing edge portion each fabricated from a first material, and installing a filler portion between the leading and trailing edge portions, the filler portion is fabricated from a second material that is lighter than the first material.

In another aspect, an outlet guide vane is provided. The outlet guide vane includes an airfoil including a leading edge portion and a trailing edge portion each fabricated from a first material, and a filler portion positioned between the leading and trailing edge portions, the filler portion fabricated from a second material that is different than the first material.

In a further aspect, a gas turbine engine assembly is provided. The gas turbine engine assembly includes a core gas turbine engine, a fan assembly including a plurality of fan blades coupled to the core gas turbine engine, and a plurality of outlet guide vanes coupled downstream from the fan blades, at least one of the outlet guide vanes including an airfoil including a leading edge portion and a trailing edge portion each fabricated from a first material, and a filler portion positioned between the leading and trailing edge portions, the filler portion fabricated from a second material that is different than the first material.

### BRIEF DESCRIPTION OF THE DRAWINGS

Embodiments of the present invention will now be described, by way of example only, with reference to the accompanying drawings, in which:
Figure 1 is a schematic illustration of an exemplary gas turbine engine assembly;
Figure 2 is a front view of a fan frame that includes a plurality of outlet guide vanes that may be utilized with the gas turbine engine assembly shown in Figure 1;
Figure 3 is a perspective view of an outlet guide vane that may be used with the fan frame assembly shown in Figure 2;
Figure 4 is a top view of the outlet guide vane shown in Figure 3;
Figure 5 is a perspective view of an outlet guide vane that may be used with the fan frame assembly shown in Figure 2; and
Figure 6 a top view of the outlet guide vane shown in Figure 5; and
Figure 7 a top view of another exemplary outlet guide vane.

### DETAILED DESCRIPTION OF THE INVENTION

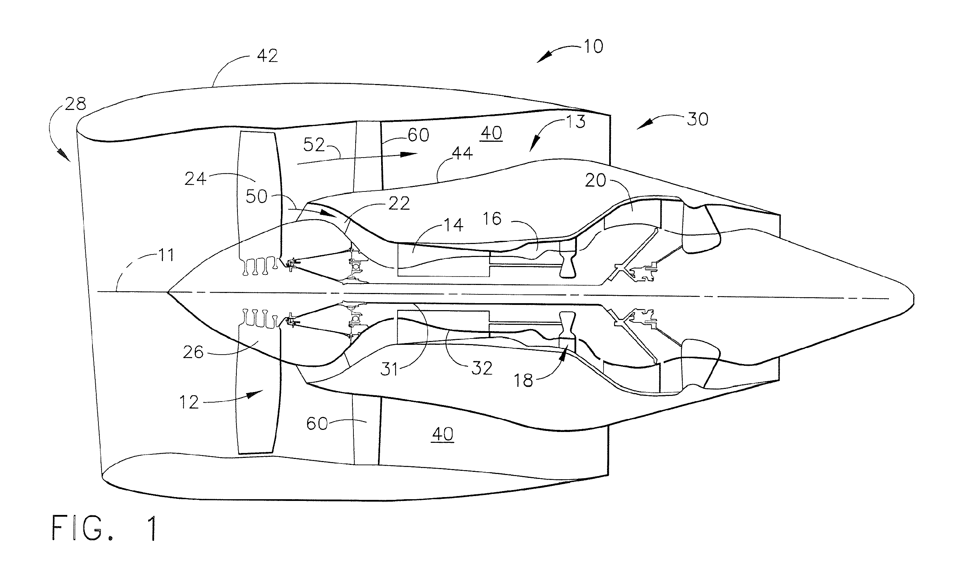

Figure 1 is a schematic illustration of an exemplary gas turbine engine assembly 10 having a longitudinal axis 11. Gas turbine engine assembly 10 includes a fan assembly 12 and a core gas turbine engine 13. Core gas turbine engine 13 includes a high pressure compressor 14, a combustor 16, and a high pressure turbine 18. In the exemplary embodiment, gas turbine engine assembly 10 also includes a low pressure turbine 20, and a multi-stage booster compressor 22, and a splitter 44 that substantially circumscribes booster 22.

Fan assembly 12 includes an array of fan blades 24 extending radially outward from a rotor disk 26. Gas turbine engine assembly 10 has an intake side 28 and an exhaust side 30. Fan assembly 12, booster 22, and turbine 20 are coupled together by a first rotor shaft 31, and compressor 14 and turbine 18 are coupled together by a second rotor shaft 32.

In operation, air flows through fan assembly 12 and a first portion of the airflow is channeled through booster 22. The compressed air that is discharged from booster 22 is channeled through compressor 14 wherein the airflow is further compressed and delivered to combustor 16. Hot products of combustion (not shown in Figure 1) from combustor 16 are utilized to drive turbines 18 and 20, and turbine 20 is utilized to drive fan assembly 12 and booster 22 by way of shaft 31. Gas turbine engine assembly 10 is operable at a range of operating conditions between design operating conditions and off-design operating conditions.

A second portion of the airflow discharged from fan assembly 12 is channeled through a bypass duct 40 to bypass a portion of the airflow from fan assembly 12 around core gas turbine engine 13. More specifically, bypass duct 40 extends between a fan casing or shroud 42 and splitter 44. Accordingly, a first portion 50 of the airflow from fan assembly 12 is channeled through booster 22 and then into compressor 14 as described above, and a second portion 52 of the airflow from fan assembly 12 is channeled through bypass duct 40 to provide thrust for an aircraft, for example. Gas turbine engine assembly 10 also includes a fan frame assembly 60 to provide structural support for fan assembly 12 and is also utilized to coupled fan assembly 12 to core gas turbine engine 13.

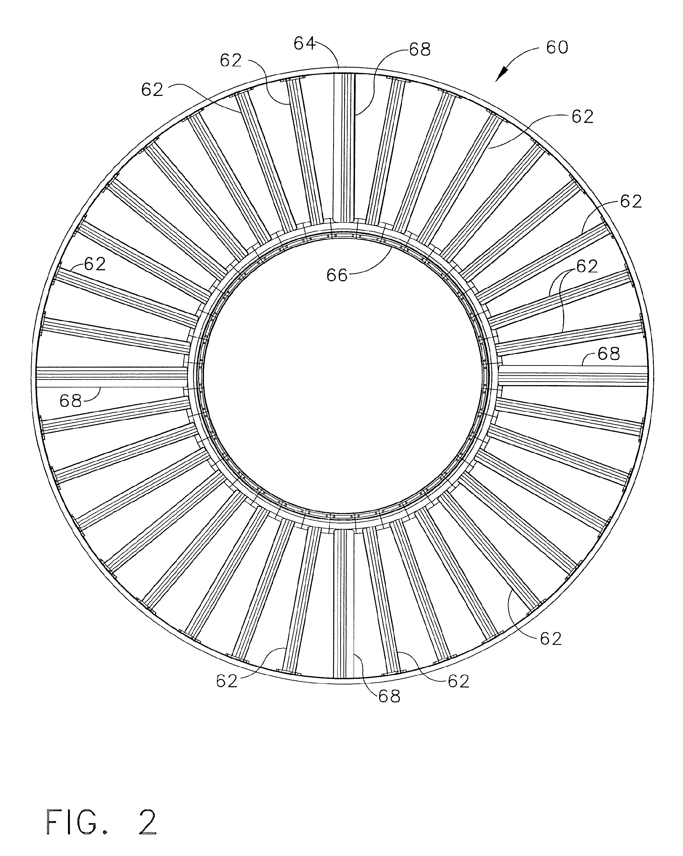

Figure 2 is a front view of fan frame assembly 60. Fan frame assembly 60 includes a plurality of outlet guide vanes 62 that extend substantially radially between a radially outer mounting flange 64 and a radially inner mounting flange 66 and are circumferentially-spaced within bypass duct 40. Fan frame assembly 60 also includes a plurality of struts 68 that are coupled between radially outer mounting flange 64 and radially inner mounting flange 66. In one embodiment, fan frame assembly 60 is fabricated in arcuate segments in which flanges 64 and 66 are coupled to outlet guide vanes 62 and struts 68. In the exemplary embodiment, outlet guide vanes 62 and struts 68 are coupled coaxially within bypass duct 40. Specifically, outlet guide vanes 62 and struts 68 each coupled between flanges 64 and 66 in the same axial location as shown in Figure 2. Optionally, outlet guide vanes 62 may be coupled downstream from struts 68 within bypass duct 40.

Fan frame assembly 60 is one of various frame and support assemblies of gas turbine engine assembly 10 that are used to facilitate maintaining an orientation of various components within gas turbine engine assembly 10. More specifically, such frame and support assemblies interconnect stationary components and provide rotor bearing supports. Fan frame assembly 60 is coupled downstream from fan assembly 12 within bypass duct 40 such that outlet guide vanes 62 and struts 68 are circumferentially-spaced around the outlet of fan assembly 12 and extend across the airflow path discharged from fan assembly 12.

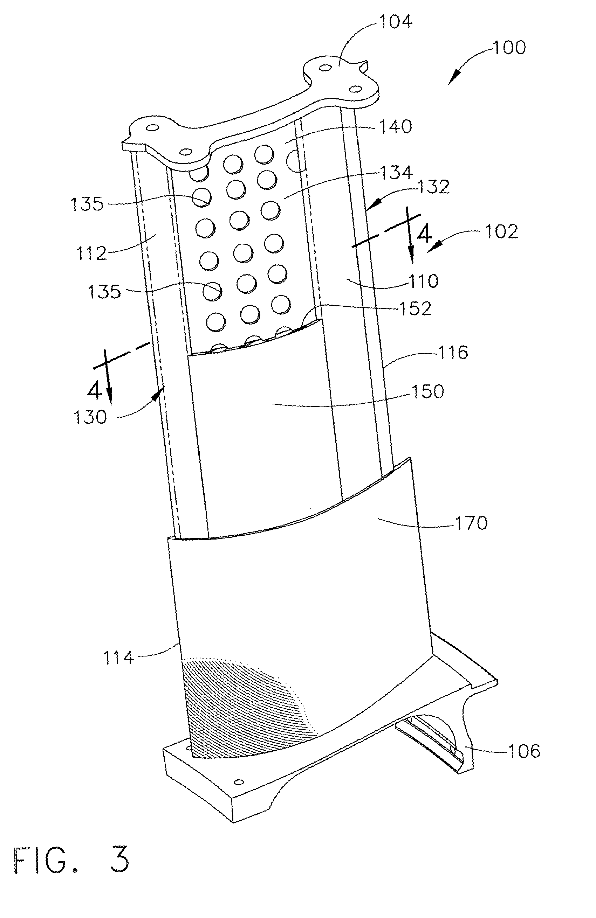

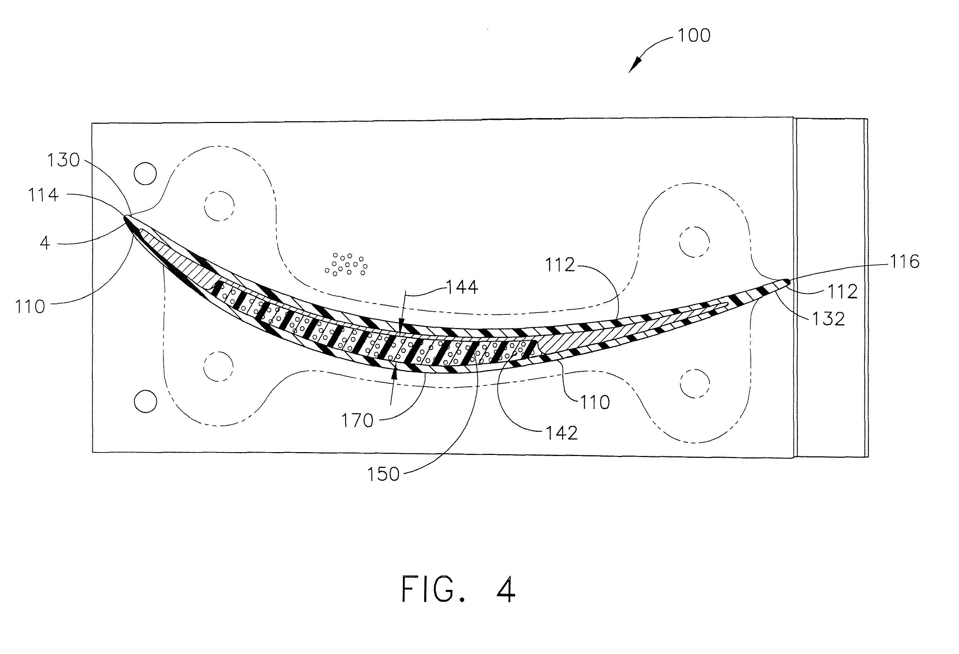

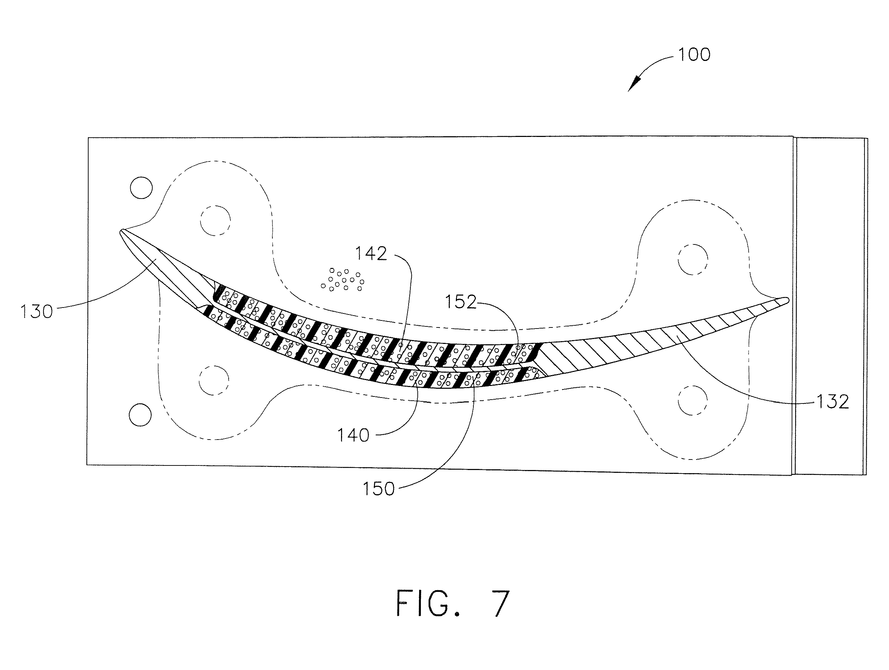

Figure 3 is a perspective view of an outlet guide vane 100 that may be used with fan frame 60 shown in Figure 2. Figure 4 a top view of outlet guide vane 100 shown in Figure 3. Figure 7 is a top view of another exemplary outlet guide vane. In the exemplary embodiment, outlet guide vane 100 includes an airfoil 102 that is coupled between a radially outer flange 104 and a radially inner flange 106. In the exemplary embodiment, airfoil 102, radially outer flange 104, and a radially inner flange 106 are cast or forged as a unitary outlet guide vane 100. Optionally, radially outer flange 104 and a radially inner flange 106 may be coupled to airfoil 102 using a welding or brazing technique, for example.

Airfoil 102 includes a first sidewall 110 and a second sidewall 112. In one embodiment, either first and/or second sidewalls 110 and/or 112 may be contoured to improve aerodynamic performance. In the exemplary embodiment, first sidewall 110 is convex and defines a suction side of airfoil 102, and second sidewall 112 is concave and defines a pressure side of airfoil 102. Sidewalls 110 and 112 are joined at a leading edge 114 and at an axially-spaced trailing edge 116 of airfoil 102. More specifically, airfoil trailing edge 116 is spaced chordwise and downstream from airfoil leading edge 114. First and second sidewalls 110 and 112, respectively, extend longitudinally or radially outward in span from radially inner flange 106 to radially outer flange 104. In the exemplary embodiment, at least a portion of outlet guide vane 100 is fabricated utilizing a metallic material such as, but not limited to, titanium, aluminum, and/or a Metal Matrix Composite (MMC) material.

As shown in Figures 3 and 4, airfoil 102 includes a leading edge portion or spar 130, a trailing edge portion or spar 132, and a connecting member 134 that is coupled between leading edge portion 130 and trailing edge portion 132 are each fabricated utilizing a metallic material such as titanium, aluminum, and/or a Metal Matrix Composite (MMC) material, for example. More specifically, airfoil 102 has a profile that tapers outwardly from leading edge 114 at least partially towards trailing edge 116 and also tapers outwardly from trailing edge 116 at least partially towards leading edge 114. The profile then tapers inwardly from the leading edge portion to 130 to connecting member 134 and also tapers inwardly from trailing edge portion 132 to connecting member such that at least one pocket 140 is defined between leading edge portion 130 and trailing edge portion 132. Optionally, as shown in Figure 7, airfoil 102 includes a second pocket 142 that is defined leading edge portion and trailing edge portion or spar 132. Specifically, connecting member 134 is positioned approximately centrally between leading edge portion and trailing edge portion or spar 132 such that first and second pockets 140 and 142 are substantially similar in size and depth. In the exemplary embodiment, connecting member 134 has a plurality of openings 135 extending therethrough to further reduce the overall weight of outlet guide vane 100. Optionally, connecting member 134 does not include openings 135.

In the exemplary embodiment, first and/or second pockets 140 and/or 142 are each sized to receive a respective filler 150 and/or 151 therein that is a relatively lightweight material. Lightweight material as used herein, is defined as a material that is different than the material utilized to fabricate leading edge portion 130, trailing edge portion 132, and connecting member 134, are fabricated utilizing a material that has a per volume weight that is greater than the per volume weight of the filler material. In the exemplary embodiment, each filler 150 and 151 are fabricated from a Styrofoam, for example. As such, each pocket 140 and 142 has a depth 144 and each respective filler 150 and 151 has a thickness 152 that is substantially equal to the pocket depth 144 such that when each respective filler 150 and 151 are positioned within pockets 140 and/or 142, airfoil 102 has an aerodynamic profile that is substantially smooth from the airfoil leading edge 114 to the airfoil trailing edge 116. That is, the fillers 150 and 151 are each substantially flush with the outer surfaces of both leading edge portion 130 and/or trailing edge portion 132 when positioned within a respective pocket 140 and 142. In one embodiment, fillers 150 and 151 are fabricated as separate components and installed within pockets 140 and 142. Optionally, fillers 150 and 151 are sprayed or injected into pockets 140 and 142 and machined to form a relatively smooth or aerodynamic outer surface to which a covering material is attached, as discussed below.

As such to fabricate outlet guide vane 100, the vane is cast or forged to include the leading edge portion 130, trailing edge portion 132, and connecting member 134, and the inner and outer flange 104 and 106. The fillers 150 and 151 are then injected or coupled within the pockets 140 and 142 as described above. A covering material 170 is then wrapped around the outer periphery of airfoil 102 to substantially encapsulate leading edge portion 130, trailing edge portion 132, and fillers 150 and 151. For example, covering material 170 may be wrapped at a forty-five degree angle completely around airfoil 102 in successive rows or layers. Moreover, the covering material 170 facilitates increasing the overall structural integrity of outlet guide vane 100 and forms a relatively smooth outer surface to improve aerodynamic performance.

In the exemplary embodiment, covering material 170 is a composite material that is bonded to the leading edge portion 130, trailing edge portion 132, and connecting member 134, and the inner and outer flange 104 and 106 utilizing a thermoset material, for example. In the exemplary embodiment, the covering material may be a fiberglass material, a graphite material, a carbon material, a ceramic material, an aromatic polyamid material such as KEVLAR, a thin metallic material, and/or mixtures thereof. Any suitable thermosetting polymeric resin can be used in forming covering material 170, for example, vinyl ester resin, polyester resins, acrylic resins, epoxy resins, polyurethane resins, bismalimide resin, and mixtures thereof. Overall, the covering material 170 is selected such that an exterior surface of outlet guide vane is resistant to wear and or damage that may be caused by foreign objects ingested into gas turbine engine assembly 10.

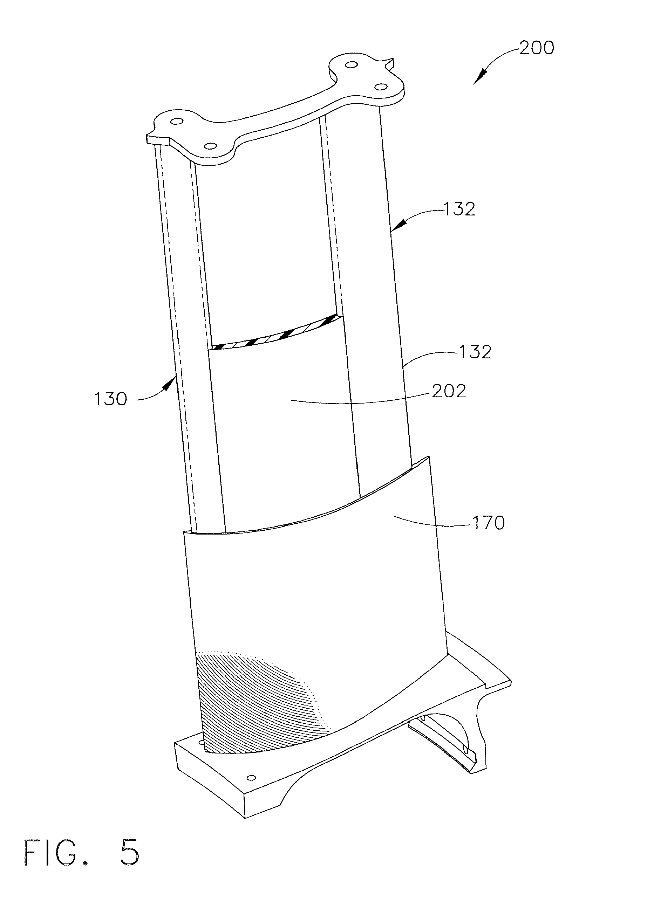

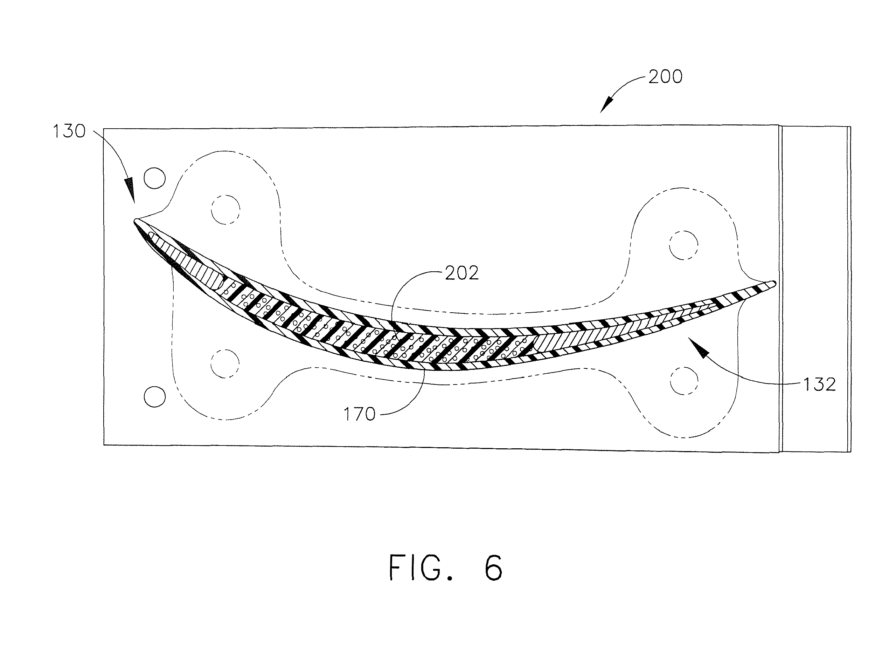

Figure 5 is a perspective view of an outlet guide vane 200 that may be used with fan frame 60 shown in Figure 2. Figure 6 a top view of outlet guide vane 200 shown in Figure 5. In the exemplary embodiment, outlet guide vane 200 is substantially similar to outlet guide vane 100 shown in Figures 3 and 4 without connecting member 134. In this embodiment, removing connecting member 134 further decreases the overall weight of outlet guide vane 200. As such, outlet guide vane 200 includes a single filler portion 202 that is positioned between leading edge portion 130 and trailing edge portion 132. Filler portion 202 is installed between leading and trailing edge portions 130 and 132 as discussed above. To complete fabrication, outlet guide vane 200 is covered with covering material 170 as described above.

Described herein is a gas turbine engine wherein at least some known outlet guide vanes are replaced with an outlet guide vane having a substantially hollow interior portion filled with a relatively lightweight material and then wrapped with a composite material to form a lightweight outlet guide vane. As such, the exemplary outlet guide vanes described herein reduce the overall weight of the gas turbine engine assembly while still maintaining structural integrity thus achieving the very challenging engine weight goals for new applications. The method of fabricating the outlet guide vanes includes fabricating an airfoil that includes a leading edge portion and a trailing edge portion each fabricated from a first material, and installing a filler portion between the leading and trailing edge portions, the filler portion is fabricated from a second material that is lighter than the first material.

More specifically, the outlet guide vanes described herein includes two spars that form the airfoil portion of the outlet guide vane. The area between the spars is filled with a lightweight material such as Styrofoam to add rigidity to the airfoil, and then wrapped with a composite material. In one embodiment, the airfoil includes two spars connected by a thin web member to provide radial and axial overturning stiffness. Moreover, the connecting member also provides additional strength to the airfoil shape to protect against any Aero Mechanical vibrations. Optionally, the airfoil does not include the connecting member.

In one embodiment, the spars are substantially solid. Optionally, a portion of the interior of each spar may be removed to further reduce the overall weight of the outlet guide vane. The outlet guide vane is then covered utilizing a thin metallic material or a composite material to protect the outlet guide vane from solid particle damage. In one embodiment, the spars are fabricated using a metallic material. Optionally, the spars may be fabricated utilizing a composite material that includes a plurality of fibers woven directionally radial to the gas turbine engine axis 11.

As a result, the outlet guide vanes described herein substantially reduce the overall weight of the gas turbine engine assembly. For example, the outlet guide vanes described herein are 30% to 50% lighter than known outlet guide vanes.

While the invention has been described in terms of various specific embodiments, those skilled in the art will recognize that the invention can be practiced with modification within the spirit and scope of the claims.

## Claims

1. An outlet guide vane (100) for a gas turbine engine (10), said outlet guide vane comprising:
an airfoil (102) comprising a leading edge portion (130) and a trailing edge portion (132) each fabricated from a first material; and
a filler portion (202) positioned between said leading and trailing edge portions, said filler portion fabricated from a second material that is different than said first material.

2. An outlet guide vane (100) in accordance with Claim 1, wherein said first material comprises a metallic material and said second material comprises a foam material.

3. An outlet guide vane (100) in accordance with Claim 1, wherein said first material comprises a composite material and said second material comprises a foam material.

4. An outlet guide vane (100) in accordance with any one of the preceding Claims, further comprising:
a connecting member (134) coupled between said leading and trailing edge portions (130, 132), said connecting member defining a first pocket (140) that is formed in an airfoil first side and a second pocket (142) that is formed in an airfoil second side;
a first filler (150) formed in said first pocket; and
a second filler (151) formed in said second pocket, each of said first and second fillers having a width that is substantially equal to a depth of said first and second pockets.

5. An outlet guide vane (100) in accordance with any one of the preceding Claims, wherein said connecting member (134) comprises a plurality of openings (135) extending therethrough.

6. An outlet guide vane (100) in accordance with Claim 1, further comprising:
a radially inner flange (106); and
a radially outer flange (104), said leading and trailing edge portions (130, 132) coupled between said radially inner and outer flanges to form said airfoil (102).

7. An outlet guide vane (100) in accordance with Claim 1, further comprising a covering material (170) substantially circumscribing said leading and trailing edge portions (130, 132) such that said filler (150) is substantially encapsulated within said airfoil (102).

8. A gas turbine engine assembly (10), comprising:
a core gas turbine engine (13);
a fan assembly (12) disposed downstream from said core gas turbine engine, said fan assembly comprising a plurality of fan blades (24); and
a plurality of outlet guide vanes (100) disposed downstream from said fan blades, at least one of said outlet guide vanes comprising
an airfoil (102) comprising a leading edge portion (130) and a trailing edge portion (132) each fabricated from a first material; and
a filler portion (202) positioned between said leading and trailing edge portions, said filler portion fabricated from a second material that is different than said first material.

9. A gas turbine engine assembly (10) in accordance with Claim 8, further comprising a plurality of fan struts (68), said fan struts positioned coaxially with said at least one stator vane.

10. A gas turbine engine assembly (10) in accordance with Claim 8, wherein said first material comprises at least one of a composite material and a metallic material and said second material comprises a foam material.
